(19) Europäisches Patentamt
European Patent Office
Office européen des brevets

(11) Veröffentlichungsnummer: **0 395 966 A2**

# (12) EUROPÄISCHE PATENTANMELDUNG

(21) Anmeldenummer: **90107590.3**

(22) Anmeldetag: **21.04.90**

(51) Int. Cl.5: **C08L 77/00, C08L 77/02, C08L 77/06, //C08K5/36, C08K7/14,C08J5/00,C08J5/18, (C08L77/00,81:02)**

(30) Priorität: **04.05.89 DE 3914717**

(43) Veröffentlichungstag der Anmeldung: **07.11.90 Patentblatt 90/45**

(84) Benannte Vertragsstaaten: **DE ES FR GB IT NL**

(71) Anmelder: **BAYER AG**
**D-5090 Leverkusen 1 Bayerwerk(DE)**

(72) Erfinder: **Heinz, Hans-Detlef, Dr.**
**Breslauer Strasse 31**
**D-4150 Krefeld 11(DE)**
Erfinder: **Sommer, Alexa, Dr.**
**Morgengraben 3**
**D-5000 Köln 80(DE)**
Erfinder: **El Sayed, Aziz, Dr.**
**Saarlauterner Strasse 39**
**D-5090 Leverkusen 1(DE)**
Erfinder: **Dhein, Rolf, Dr.**
**Deswatinesstrasse 30**
**D-4150 Krefeld 1(DE)**
Erfinder: **Nielinger, Werner, Dr.**
**Bärenstrasse 21**
**D-4150 Krefeld(DE)**
Erfinder: **Traenckner, Hans-Joachim, Dr.**
**Leiebos 31, Bus 00111**
**B-2060 Merksem(BE)**
Erfinder: **Pielartzik, Harald, Dr.**
**Doerperhofstrasse 39**
**D-4150 Krefeld(DE)**
Erfinder: **Köhler, Burkhard, Dr.**
**Virneburgstrasse 9**
**D-4150 Krefeld 11(DE)**

(54) **Polyamid-Formmassen mit verbesserter UV-Beständigkeit und sehr guten mechanischen Eigenschaften.**

(57) Die Erfindung betrifft Polyamid-Formmassen auf Basis spezieller aliphatischer Polyamide mit verbesserter UV-Beständigkeit und sehr guten mechanischen Eigenschaften, gekennzeichnet durch einen relativ geringen Gehalt an polymeren UV-Stabilisatoren mit dem (überwiegenden) Strukturelement (I),

$-\!\!\left[\text{Ar-S}\right]\!\!-$ (I)

wobei Ar einen gegebenenfalls substituierten Arylenrest bedeutet, ein Verfahren zur Herstellung der erfindungsgemäßen Polyamid-Formmassen sowie die Verwendung der erfindungsgemäßen Formmassen zur Herstellung von Formkörpern, Folien und anderen Gegenständen.

EP 0 395 966 A2

# Polyamid-Formmassen mit verbesserter UV-Beständigkeit und sehr guten mechanischen Eigenschaften

Die Erfindung betrifft Polyamid-Formmassen auf Basis spezieller aliphatischer Polyamide mit verbesserter UV-Beständigkeit und/oder verbesserter Farbe und sehr guten mechanischen Eigenschaften, gekennzeichnet durch einen relativ geringen Gehalt an polymeren UV-Stabilisatoren/Farbverbesserern mit dem (überwiegenden) Strukturelement (I),

$-[Ar-S]-$ (I)

wobei Ar einen gegebenenfalls substituierten Arylenrest bedeutet, ein Verfahren zur Herstellung der erfindungsgemäßen Polyamid-Formmassen sowie die Verwendung der erfindungsgemäßen Formmassen zur Herstellung von Formkörpern, Folien und anderen Gegenständen.

Polyamide sind eine seit vielen Jahren für eine Vielzahl praktischer Anwendungen bewährte Klasse von Polymeren, die nach verschiedenen Verfahren hergestellt werden können, die aus sehr unterschiedlichen Polyamid-bildenden Bausteinen synthetisiert werden können und die im speziellen Anwendungsfall, allein oder auch in Kombination mit Verarbeitungshilfsmitteln, polymeren Legierungspartnern oder auch mineralischen Verstärkungsmaterialien (wie z.B. Füllstoffe oder Glasfasern) zu Werkstoffen mit speziell eingestellten Eigenschaftskombinationen ausgerüstet werden können. So werden Polyamide in großen Mengen zur Herstellung von Fasern, Kunststoff-Formteilen und Folien, aber auch z.B. als Schmelzkleber und Hilfsmittel in einer Vielzahl von Anwendungen technisch eingesetzt.

Ein Nachteil liegt jedoch in ihrer für viele Anwendungen ungenügenden Witterungsstabilität. Je nach Compound kann auch die Farbe verbesserungswürdig sein.

Polyamidformteile, die ungeschützt gegen Witterungseinflüsse eingesetzt werden, können vor allem unter dem Einfluß von UV-Licht im Laufe der Zeit irreversible Veränderungen des Materials zeigen, welche die Funktionstüchtigkeit der Teile einschränken. Hierzu gehören unter anderem Absinken der Schlagzähigkeit, Abnahme der Reißdehnung, Glanzverlust und Farbabwanderung. Durch Einarbeiten von Witterungsstabilisatoren läßt sich das Auftreten dieser Schädigung beträchtlich verzögern.

Bekannte Witterungsstabilisatoren für Polyamide sind sterisch gehinderte Phenole, aromatische Amine, Phosphorigsäureester, Metallverbindungen wie Kupfer-, Mangan- und Nickelsalze oder -komplexe, gegebenenfalls in Kombination mit Synergisten wie Halogenverbindungen, ferner UV-Absorber wie z.B. Benzotriazolderivate oder substituierte Benzoesäurephenylester. Vielfach werden auch mehrere Substanzen aus den genannten Klassen miteinander kombiniert.

Die genannten Stabilisatoren beeinträchtigen zum Teil erheblich die Eigenschaften der Polyamide. So verschlechtern Metallverbindungen die elektrischen Eigenschaften, zeigen in Kombination mit bestimmten, insbesondere sulfidischen Pigmenten häufig Verfärbungserscheinungen und können bei Beregnung ausgewaschen werden. Mit aromatischen Aminen stabilisierte Polyamide neigen zu starker Verfärbung. Die Wirkung phenolischer Substanzen als Witterungsstabilisatoren ist im allgemeinen gering.

Phosphorigsäureester können unter Hitzeeinwirkung bei Polyamiden starke Molekulargewichtsschwankungen verursachen, die zu Verarbeitungsschwierigkeiten führen können UV-Absorber schließlich müssen in relativ hoher Konzentration in Polyamide eingearbeitet werden, um einen nennenswerten Witterungsschutz zu bieten, was zu Farbverfälschungen (Vergilbung) führen kann.

Alle diese zumeist vergleichsweise niedermolekularen Substanzen besitzen außerdem bei den hohen Verarbeitungstemperaturen der Polyamide einen beträchtlichen Dampfdruck, was zu Verarbeitungsverlusten führt Weiterhin sind sie aufgrund ihrer endlichen Löslichkeit in Wasser bzw. anderen Medien extrahierbar. Außerdem kommt dazu, daß viele Stabilisatoren mit Polyamid, insbesondere bei Aufnahme des gleichgewichtsbedingten Wassers aus der Umgebung (Konditionierung), nicht ausreichend kompatibel sind, so daß sie migrieren, ausschwitzen und Oberflächenbeläge bilden, die den optischen Eindruck des Formteils beeinträchtigen.

Mit polymeren UV-Stabilisatoren kann zwar unter Umständen ein Teil dieser Nachteile vermieden werden, jedoch ist die Herstellung solcher polymerer Stabilisatoren aufwendig. Weiterhin ist es oft schwierig, aufgrund der fast immer vorhandenen Imcompatibilität zweier Polymerer gute mechanische Eigenschaften zu erzielen.

Überraschend wurde nun gefunden, daß spezielle aliphatische Polyamide, ausgewählt aus PA 6, PA 66 sowie Copolyamiden der beiden, bei Zusatz geringer Mengen eines polymeren UV-Stabilisators Farbverbesserer mit dem überwiegenden Strukturelement (I),

$-[Ar-S]-$ (I)

wobei Ar einen gegebenenfalls substituierten Arylenrest bedeutet, eine deutlich verbesserte Stabilität gegenüber UV-Licht (gemessen anhand der Primärradikalbildungsgeschwindigkeit bei UV-Bestrahlung)

und/oder eine hellere ("weißere") Farbe besitzen, wobei die resultierenden Formmassen völlig überraschenderweise sehr gute mechanische Eigenschaften aufweisen und wobei der polymere UV-Stabilisator/Farbverbesserer noch weitere positive Effekte bewirken kann.

Gegenstand der Erfindung sind daher Polyamid-Formmassen auf Basis ausgewählter aliphatischer Polyamide mit verringerter Primärradikalbildungsgeschwindigkeit bei UV-Bestrahlung und/oder verbesserter Farbe und sehr guten mechanischen Eigenschaften, dadurch gekennzeichnet, daß sie zu

A) ungefähr 95 bis 99,7 Gew.-% aus aliphatischen Polyamiden, ausgewählt aus Polyamid 6, Polyamid 66 und Copolyamiden aus Basis dieser,

B) 0,3 bis ungefähr 5 Gew.-% aus polymeren UV-Stabilisatoren/Farbverbesserern mit dem überwiegenden Strukturelement (I),

$-[Ar-S]-$ (I)

wobei Ar einen gegebenenfalls substituierten Arylenrest bedeutet, sowie gegebenenfalls

C) 0,001 bis ungefähr 200 Gew.-%, bezogen auf die Summe der Gewichte von A) und B), weiterer Zusatzstoffe bestehen.

Gegenstand der Erfindung ist weiterhin ein Verfahren zur Herstellung der erfindungsgemäßen Formmassen durch Vermischen der Komponenten in der Schmelze sowie ihre Verwendung zur Herstellung von Formkörpern, Folien und anderen Gegenständen.

Die erfindungsgemäß einzusetzenden polymeren UV-Stabilisatoren Farbverbesserer mit dem überwiegenden Strukturmerkmal (I) sind Arylensulfid-Homo- und/oder Copolymere, wobei der Costruktur-Anteil ≦ 50 Mol-% sein soll. Bevorzugt sind teilkristalline Polymere.

Geeignete Beispiele für Arylenreste Ar in Formel (I) sind z.B. (II) und (III).

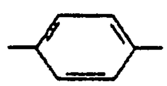

(II)

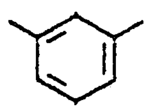

(III)

Bevorzugter Rest Ar ist der p-Phenylenrest (II).

Bevorzugte UV-Stabilisatoren/Farbverbesserer sind Homo-und/oder Copolymere mit dem überwiegenden Strukturmerkmal (IV);

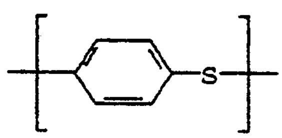

(IV)

besonders bevorzugt ist das Homopolymere des Bausteins (IV), Poly-p-phenylensulfid (PPS).

Geeignete Comonomere sind z.B. (V) und (VI).

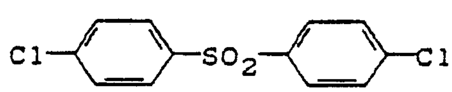

(V)

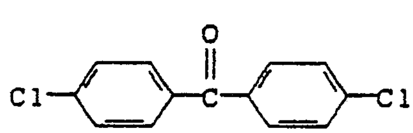

(VI)

Die erfindungsgemäß einzusetzenden UV-Stabilisatoren/Farbverbesserer sind bekannte Stoffe oder können nach prinzipiell bekannten Verfahren hergestellt werden.

Geeignet sind Polymere nach Formel (I) mit Schmelzviskositäten (bei 310 °C und 1000 $s^{-1}$) von ca. 10

bis 500 Pa.s bevorzugt 20 bis 200 Pa.s, besonders bevorzugt 25 bis 180 Pa.s. Ganz besonders bevorzugt ist Polyphenylensulfid mit einer Schmelzviskosität von 50-160 Pa.s.

Bevorzugt werden solche Arylensulfidpolymere B) eingesetzt, die ohne nachträglichen oxidativen Molekulargewichtsaufbau, sondern in Lösung direkt zu hohen Molekulargewichten kondensiert wurden. Verfahren zu ihrer Herstellung sind bekannt, siehe z.B. EP 0 171 021. Entsprechende Polyphenylensulfide sind beispielsweise unter den Namen ®Tedur oder ®Fortron kommerziell erhältlich.

In der WO 86/03212 werden Polymerlegierungen aus Polyamid 46 und Polyarylensulfiden beschrieben, die sehr gute mechanische Eigenschaften haben sollen. Die genannte Anmeldung offenbart, daß Polyamid 6 und 66 mit Polyphenylensulfid nicht ausreichend kompatibel sind zur Erzielung guter mechanischer Eigenschaften. Im Vergleichsbeispiel 3 wird gezeigt, daß eine Legierung aus Polyamid 6 und 15 % PPS ein sehr schlechtes Extrusionsverhalten aufgrund der ungenügenden Kompatibilität zeigt und daß die Prüfkörper ein schlechtes Aussehen sowie ungewöhnlich niedrige Werte für Reißfestigkeit und Biegemodul besitzen. Die Anmeldung enthält keinerlei Hinweis auf eine Wirkung des PPS als UV-Stabilisator für PA 6, 66 und Copolyamide aus dieser.

In der US 4 292 416 werden Polyarylensulfide als Nukleierungsmittel, d.h., den Kristallisationsgrad erhöhende Zusätze, für Polyamide beschrieben, wobei dies allein für ein spezielles Polyamid aus Terephthalsäure und einem $C_{10}$-Diamin-Gemisch gezeigt wird. Durch den Zusatz des PPS wird die Kristallinität erhöht, während i. a. Reißfestigkeit und Biegemodul sinken; die Reißdehnung und die Kerbschlagzähigkeit steigen meist deutlich an.

Diese äußerst ungewöhnliche Kombination von Effekten wird auf alle Polyamide übertragen. Es findet sich kein Hinweis, daß Polyarylensulfide als UV-Stabilisatoren und/oder Farbverbesserer für PA wirken können.

Der überraschende und nicht vorherzusehende Befund, der der vorliegenden Erfindung zugrunde liegt, war, daß Polyarylensulfide ab einer Menge von ca. 0,3 Gew.-% aufwärts als UV-Stabilisatoren (gemessen durch die Primärradikalbildungsgeschwindigkeit bei UV-Bestrahlung bzw. Farbverbesserer) für Polyamid 6, 66 sowie Copolyamide derselben wirken, wobei im Gegensatz zur Lehre der WO 86/03212 in einem bestimmten, sehr engen Mengenbereich an Polyarylensulfid-Zusatz Formmassen mit sehr guten mechanischen sowie auch thermischen Eigenschaften entstehen, und in denen, im Gegensatz zur Lehre der US 4 292 416, die Additive B) i.a. nicht nukleierend, d.h.) den Kristallisationsgrad erhöhend, sondern häufig eher antinukleierend wirken.

Dieser enge Bereich erstreckt sich erfindungsgemäß, je nach genauen Typs des Additivs B), von ca 0,3 Gew.-% bis ca 5 Gew.-%, bevorzugt 0,5 bis 4 Gew.-% und besonders bevorzugt von 0,6 bis 3 Gew.-%. Während unterhalb von ca 0,3 Gew.-% die stabilisierende bzw. farbverbessernde Wirkung nur noch ungenügend ist, beginnen in Übereinstimmung mit der Lehre der WO 88/03212 oberhalb von ca. 5 % die mechanischen Eigenschaften sich durch den Polyarylensulfid-Zusatz allmählich zu verschlechtern.

Als Polyamide A) sind erfindungsgemäß PA 6, PA 66 und Mischungen oder Copolyamide daraus, insbesondere 6/66-Copolyamide, geeignet. Es können auch untergeordnete Anteile anderer PA-bildender Bausteine anwesend sein, z.B. 11-Aminoundekansäure, Laurinlactam, Sebazinsäure/Hexamethylendiamin u.a.m.; diese sollen in Mengen von nicht mehr als 30 Gew.-% in den Polyamiden anwesend sein. Bevorzugt werden PA 6 und 66 sowie Copolyamide der beiden, welche nicht mehr als 25 Gew.-% der jeweils anderen Monomereinheiten enthalten, eingesetzt. Besonders bevorzugt sind PA 6 und 66.

Die Polyamide können auch im Gemisch eingesetzt werden.

An Zusatzstoffen gemäß C), die in Mengen von 0,001 bis ungefähr 200 %, bevorzugt 0,01 - 100 Gew.-%, bezogen auf die Summe der Gewichte von A) und B), eingesetzt werden können, kommen z.B. in Frage

- Verstärkungs- und Füllstoffe, z.B. Glasfasern, mineralische Füllstoffe wie $SiO_2$, Talkum, Kaolin u.a., Aramidfasern, Kohlenstoff-Fasern u.a.m.,
- Weichmacher,
- Farbstoffe bzw. Pigmente,
- Nukleierungsmittel,
- Flammschutzmittel bzw. Flammschutzmittelkombinationen,
- Antioxidantien und andere Thermo-/UV-Bewitterungsstabilisatoren (bzw. Stabilisatorkombinationen),
- Entformungsmittel, Gleitmittel,
- polymere Legierungspartner.

Die erfindungsgemäß einzusetzenden polymeren UV-Stabilisatoren/Farbverbesserer bewirken bei Anwesenheit von Füll- bzw. Verstärkungsstoffen häufig völlig unerwarteterweise eine verbesserte Oberfläche. Daher sind erfindungsgemäße Formmassen, die Füll- bzw. Verstärkungsstoffe (insbesondere faserförmige) enthalten, bevorzugt.

Als polymere Legierungspartner kommen z.B. in Betracht: Dienkautschuke, Acrylat-Kautschuke, Polypropylene, Ethylen-Propylen-Copolymere, Ethylen-Propylen-Dien-Terpolymere, Ethylen-Acrylsäure/Acrylester-Terpolymere, Polystyrole, Styrol-(Meth)acrylnitrilcopolymere, (Meth)Acrylnitril-Butadien-Styrol-Polymere (ABS), Polyester wie z.B. Polyethylenterephthalat, Polysulfone, Polyphenylenoxide, Polyetherketone, Polyethersulfone und Polyetherimide, Polyesterimide, Polyimide, wie sie im Stand der Technik als Legierungspartner bzw. Modifikatoren bekannt sind.

Die polymeren Legierungspartner sollten, wenn nötig, gegebenenfalls zumindest teilweise, chemisch so modifiziert sein, daß eine partielle Ankopplung der beiden Phasen erfolgen kann. Dies kann z.B. dadurch geschehen, daß ein Copolymer aus Ethylen und/oder Propylen und geringen Mengen Acrylsäure, oder ein mit geringen Mengen Maleinsäureanhydrid gepfropftes Ethylen-Propylen(Dien)Polymer oder ein mit geringen Mengen Maleinsäureanhydrid gepfropftes Polyphenylenoxid allein oder im Gemisch mit unmodifizierten Legierungspartnern eingesetzt werden. Ankopplung kann auch über Ester- oder Epoxidgruppen erfolgen. Es kann weiter z.B. dadurch geschehen, daß geeignete niedermolekulare oder polymere Verträglichkeitsvermittler anwesend sind. Die Legierungspartner können auch reaktive Endgruppen aufweisen, welche mit dem Polyamid reagieren können, z.B. Amino-oder Carboxyl-terminierte Polydien-Kautschuke.

Die Kautschuke können auch in einer Kern-Mantel-Struktur gepfropft sein.

Auch mit den erfindungsgemäß einzusetzenden Polyamiden verträgliche und/oder unverträgliche amorphe Polyamide können als Zusatzstoff eingesetzt werden; z.B. können als amorphe PA PA 6 I (Polyhexamethylenisophthalamid) oder auch Polyamide aus Isophthalsäure, Terephthalsäure, Hexamethylendiamin und gegebenenfalls 4,4′-Diaminodicyclohexylmethan eingesetzt werden.

Bevorzugte Legierungspartner sind solche, die üblicherweise zur Erhöhung der Kälte- und/oder Trokkenschlagzähigkeit eingesetzt werden (Schlagzähmodifikatoren) sowie amorphe Thermoplaste mit Glastemperaturen von mindestens 90 °C, bevorzugt mindestens 120 °C und besonders bevorzugt mindestens 160 °C.

Die Herstellung der erfindungsgemäßen Polyamidformmassen erfolgt durch Mischen der Komponenten in der Schmelze, bevorzugt in Knetern oder Extrudern, gegebenenfalls in mehreren Schritten. Alle zur Abmischung von Thermoplasten üblichen Verfahren können angewendet werden. Die Additive B) und C) können als reine Stiffe oder in Form von Konzentraten eingesetzt werden.

Die erfindungsgemäßen Polyamid-Formmassen können z.B nach den Verfahren des Spritzgießens und der Extrusion problemlos zu Formkörpern, Folien und anderen Gegenständen verarbeitet werden. Diese sind ebenfalls Gegenstand der Erfindung.

Die erfindungsgemäßen Formmassen weisen eine deutlich verringerte Primärradikalbildungsgeschwindigkeit bei UV-Bestrahlung (Maß für die UV-Stabilität) und/oder eine verbesserte (hellere) Farbe sowie gegebenenfalls eine eine erhöhte Steifigkeitund Reißfestigkeit und Wärme formbeständigkeit (trotz erniedrigter Kristallinität; s.u.) auf. Diese erhöhte Steifigkeit und Reißfestigkeit steht im Gegensatz zu den in der US 4 292 416 beschriebenen Effekten. Die erfindungsgemäßen PA-Formmassen weisen sehr häufig eine erniedrigte Kristallinität auf; die durch den Zusatz der polymeren UV-Stabilisatoren/Farbverbesserer häufig bewirkte deutliche Verbesserung der Oberflächenqualität von Formteilen, insbesondere bei verstärkten und/oder gefüllten Typen, führen wir auf diese verringerte Kristallinität zurück. Weiterhin kann der polymere UV-Stabilisator/Farbverbesserer eine erhöhte Fließfähigkeit sowie eine deutlich verringerte Wasseraufnahmegeschwindigkeit bewirken. Die verbesserte Farbe läßt sich optisch beurteilen oder auch beispielsweise durch Reflexionsmessungen nachweisen. Sie kann schon sofort in einen Spritzgußteil oder aber auch erst nach z.B. Koditionierung auftreten. Die erfindungsgemäßen Formmassen sind daher eine wertvolle Bereicherung des Standes der Technik. Sie sind problemlos verarbeitbar.

Als Maß für die Stabilisatorwirkung der erfindungsgemäß einzusetzenden polymeren UV-Stabilisatoren wurde die Geschwindigkeit der Primärradikalbildung bei UV-Bestrahlung gewählt. Da die Photooxidation durch direkten Bindungsbruch eingeleitet wird (s.z.B. J. Lemaire, R. Arnond; Polymer Photochemistry 5, 243 (1984) und G. Valk, H. Krussmann, P. Diehl; Makromol Chem. 107, 158 (1967)), ist die Konzentration der Primärradikale bei UV-Bestrahlung ein Maß für die UV-Beständigkeit. Die Radikalkonzentrationen werden mittels ESR bestimmt (Ultrakurzbewitterung).

Von einem Prüfkörper werden dazu mittels eines Korundschabers einige wenige um starke Flocken abgeschabt und in Quarzröhrchen (3 mm Durchmesser, Standard-ESR-Meßröhrchen) an Luft vermessen. Zur Belichtung (Ultrakurzbewitterung) wird eine 500 W Hg-Hochdrucklampe in Verbindung mit einer Kaltlichtspiegeloptik und Kantenfiltern zur Selektion des Wellenlängenbereichs von 305 bis 500 nm verwendet Die Strahlungsintensität wird zu Beginn jedes UKB-Experiments mittels einer Photozelle, mit vorgeschaltetem Interferenzfilter für 313 nm, auf einen definierten Wert eingestellt. Die UKB erfolgt in einem ESR-Resonator, um während der Belichtung periodisch alle 200 sec ESR-Spektren aufzunehmen. Die Proben sind dabei auf -110 °C temperiert, um eine Weiterreaktion der photochemisch gebildeten Primärradikale während der Belichtung zu vermeiden. Aus der Amplitude der Signale in den ESR-Spektren wird die

unter UV-Belichtung entstehende Zahl der Primärradikale als Funktion der Belichtungszeit ermittelt.

Nach einer Induktionsperiode zu Beginn der Bestrahlung wird ein stationärer Zustand erreicht, d.h., die Zahl der Primärradikale wächst linear mit der Zeit. Die Steigung dieser Geraden wird als Maß für die Stabilisatorwirkung gewählt. Je geringer die Steigung, desto besser die stabilisierende Wirkung.

Als Maß für die Farbverbesserung wird eine optische Beurteilung oder auch die Messung des Remissionsgrades im Bereich des sichtbaren Lichts herangezogen. Bei letzterer bedeutet erfindungsgemäß eine höhere Remission eine bessere (hellere) Farbe.

Die erfindungsgemäßen PA-Formmassen besitzen durch den polymeren UV-Stabilisator/Farbverbesserer eine signifikant verbesserte UV-Beständigkeit (gemessen durch die verringerte Primärradikalbildungsgeschwindigkeit bei UV-Bestrahlung) und/oder eine hellere Farbe und sehr gute mechanische und sonstige Eigenschaften. Der polymere Stabilisator/Farbverbesserer ist nicht flüchtig, nicht migrierend, extraktionsbeständig, wandert bei der Konditionierung nicht aus und ist toxikologisch unbedenklich.

Die nachfolgenden Beispiele mit typischen Einsatzstoffen in typischen Mengen erläutern die Erfindung, ohne sie darauf einzuschränken. Viskotitätswerte ($\eta_{rel}$) wurden, soweit nicht anderen angegeben, bei 25 °C an einer 1 %igen Lösung in m-Kresol bestimmt.

## Beispiele

### Beispiele 1 und 2

Polyamid 6-Granulat ($\eta_{rel}$ ≈ 3,0) wurde mit 1 und 3 Gew.-% Polyphenylensulfid (PPS) mit einer Schmelzviskosität von 29 Pa.s bei 320 °C und 10 $s^{-1}$ trocken vermischt, bei 320 °C über einen Einschnecken-Laborextruder in ein Wasserbad extrudiert, gehäckselt und getrocknet. Das Granulat ist farblos.

Die Primärradikalbildungsgeschwindigkeit bei UV-Bestrahlung als Maß für die UV-Stabilität wurde wie im Text beschrieben bestimmt.

Die Steigungen der Geraden, die sich nach Beendigung der Induktionsperiode für die Primärradikalzahl als Funktion der Zeit ergeben, sind in Tabelle 1 angegeben.

### Vergleichsbeispiel 1

In derselben Weise wurde dasselbe PA 6-Granulat ohne PPS extrudiert und auf seine Primärradikalbildungsrate geprüft.

Die Daten finden sich in Tabelle 1.

Tabelle 1

| Beispiel | $\eta_{rel}$ | Radikalbildungsrate [$h^{-1}$] | Achsenabschnitt |
|---|---|---|---|
| 1 | 3,1 | 1204 | 5726 |
| 2 | 3,0 | 918 | 3979 |
| Vgl. 1 | 3,0 | 2581 | 12151 |

### Beispiel 3 und Vergleich 2

Von einem PA 6-Granulat ($\eta_{rel}$ ≈ 2,9), welches 2 % PPS der Schmelzviskosität 40 Pa.s bei 310 °C und 1.000 $s^{-1}$, eingebracht durch Compoundierung, enthielt, wurden die mechanischen Eigenschaften bestimmt (Tabelle 2). Das PA 6 war Durethan® B 30 S (ein Produkt der Bayer AG).

Tabelle 2

| Eigenschaft | [Einheit] | Vergleich 2[1)] | Beispiel 3 |
|---|---|---|---|
| $\sigma_{bB}$ | MPa | 103 | 105 |
| $D_{bR}$ | % | 5,9 | 5,8 |
| Biege E-Modul | MPa | 2583 | 2614 |
| $\sigma_R$ | MPa | 45 | 64 |
| $\epsilon_R$ | % | 48 | 28 |
| Zug E-Modul | MPa | 3298 | 3351 |
| IZOD $a_{k'}$ | KJ/m² | 7,9 | 6,2 |
| HDT A | °C | ca. 66 | 66 |
| B | °C | ca. 194 | 193 |
| DSC | | | |
| 1.Aufheizung: (Prüfkörper) | | | |
| Schmelzw. | J/g | 65,3 | 63,6 |
| Maximum | °C | 224,4 | 222,3 |
| 2.Aufheizung: | | | |
| Schmelzw. | J/g | 67,7 | 66,1 |
| Maximum | °C | 220,6 | 220,0 |

1) Vergleich, nicht mitextrudiert.

Die Beispiele zeigen, daß durch die geringe PPS-Menge im Bereich von 1 bis 3 Gew.-% die Primärradikalbildungsgeschwindigkeit bei UV-Bestrahlung (Maß für die UV-Stabilität) deutlich verringert wird. Die mechanischen Eigenschaften und die Farbe sind sehr gut, insbesondere sind trotz der etwas geringeren Kristallinität (DSC-Schmelzwärme, 1. Aufheizen) überraschenderweise die Steifigkeitseigenschaften (Reißfestigkeit, E-Moduli) erhöht. Trotz niedrigerer Kristallinität wird die Wärmeformbeständigkeit nicht verringert.

Die Effekte sind genau entgegengesetzt zu den in der US 4 292 416 beschriebenen.

Beispiel 4 - 7 + Vergleichsbeispiele 3 - 6

Glasfaserverstärktes (50 %) PA 6 bzw. PA 66 wurde ohne und mit je 2 Gew.-% (35 Pa.s, 1000 $s^{-1}$, 310 °C) compoundiert und zu Rundscheiben ($\phi$ 6 cm) verspritzt. Die optische Farbbeurteilung ist in Tabelle 3 enthalten.

Die Rundscheiben wurden 120 h lang bei 70 °C in Wasser gelagert. Die Farbe der Proben ist ebenfalls in Tabelle 3 enthalten.

Tabelle 3

| Beispiel | PA[1]) | PPS | $H_2O$-Lagerung | Farbe |
|---|---|---|---|---|
| 4 | 66 | 2 | - | fast weiß |
| Vgl. 3 | 66 | - | - | leicht gelblich |
| 5 | 6 | 2 | - | leichtes Beige |
| Vgl. 4 | 6 | - | - | kräftiges Braun |
| 6 | 66 | 2 | x | leichtes Beige |
| Vgl. 5 | 66 | - | x | kräftig gelblich |
| 7 | 6 | 2 | x | hellbeige |
| Vgl. 6 | 6 | - | x | kräftiges Braun |

[1]) 6 = PA 6, 50 % GF, 66 = PA 66, 50 % GF

Alle PPS-haltigen Proben weisen eine deutlich hellere Farbe auf als die Vergleichsproben.

Die wichtigsten mechanischen Eigenschaften der spritzfrischen Proben sind in Tabelle 4 zusammengestellt

Tabelle 4

| | Beispiel | | | |
|---|---|---|---|---|
| Eigenschaft | 4 | Vgl. 3 | 5 | Vgl. 4 |
| $\sigma_R$ [MPa] | 194 | 194 | 203 | 202 |
| $\epsilon_R$ [%] | 3,6 | 3,6 | 3,9 | 3,7 |
| $E_\sigma$ [MPa] | 14111 | 14343 | 15646 | 15842 |
| $\delta_{bB}$ | 304 | 303 | 328 | 314 |
| $D_{bR}$ [%} | 3,8 | 3,7 | 3,8 | 3,8 |
| $E_B$ [MPa] | 12183 | 12440 | 13479 | 13274 |
| IZOD $a_n$ [$KJm^{-2}$] | 68 | 71 | 77 | 77 |
| HDT-A [°C] | 247 | 248 | 215 | 206 |
| Kristallisationswärme [J/g] (beim Abkühlen) | 35,7 | 36,1 | 32,5 | 33,0 |

Die mechanischen Eigenschaften der Compounds bleiben unverändert gut durch PPS-Zusatz. Im PA6 ist die HDT-A bei anähernd gleicher Kristallinität deutlich erhöht.

Die Daten (mechanisches Verhalten, Kristallinität) stehen im Widerspruch zur US 4 292 416 bzw. WO 86/03212.

Beispiel 8 + Vergleichsbeispiel 7

PA 66 (Durethan® A 30, ein Produkt der Bayer AG) wurde mit 2 % PPS (siehe Beispiel 3) über einen ZSK 53-Extruder extrudiert und in üblicher Weise aufgearbeitet. Die wichtigsten mechanischen Eigenschaften sind in Tabelle 5 zusammen mit denen eines nicht modifizierten PA 66 verzeichnet.

Tabelle 5

| Eigenschaft | [Einheit] | Vergleich 7[1)] | Beispiel 8 |
|---|---|---|---|
| $\sigma_{bB}$ | MPa | 113,6 | 120 |
| $D_{bR}$ | % | 6,3 | 6,3 |
| Biege E-Modul | MPa | 2780 | 2922 |
| $\sigma_R$ | MPa | 51,6 | 90 |
| $\epsilon_R$ | % | 47 | 11,8 |
| Zug E-Modul | MPa | 3148 | 3603 |
| IZOD $a_n$ | KJ/m² | 86 | 93 |
| IZOD $a_k$ | KJ/m² | 6,2 | 6,2 |
| HDT A | °C | 90 | 91 |
| B | °C | 232 | 243 |
| Wasseraufnahme bei 70°C | | | |
| nach 1 h | % | 1,00 | 0,77 |
| 2 h | % | 1,31 | 1,00 |
| 4 h | % | 1,79 | 1,36 |
| 8 h | % | 2,52 | 1,66 |
| 24 h | % | 4,40 | 3,94 |
| 1. Aufheizung: (Prüfkörper) | | | |
| Schmelzw. | J/g | 73,6 | 61,4 |
| Maximum | °C | 266,2 | 265,4 |
| 2.Aufheizung: | | | |
| Schmelzw. | J/g | 72,7 | 70,9 |
| Maximum | °C | 264,3 | 262,5 |

1) Vergleich, nicht mitextrudiert.

Die Beispiele zeigen, daß trotz der deutlich niedrigeren Kristallinität (ca. 15 bis 20 %; 1. Aufheizen) im Prüfkörper das PPS-modifizierte PA 66 deutlich erhöhte Zugfestigkeit, Moduli und Wärmeformbeständigkeit zeigt bei guter Zähigkeit. Die Wasseraufnahmegeschwindigkeit ist erniedrigt.

Beispiel 9 und Vergleich 8

Ein 30 % mineralgefülltes PA 6 (Durethan® BM230, ein Produkt der Bayer AG) wurde mit 2 % PPS (s. Bsp. 3) auf einem Doppelwellenextruder compoundiert und wie üblich aufgearbeitet. Die wichtigsten mechanischen Eigenschaften sind mit denen eines Vergleichs in Tabelle 6 zusammengestellt.

Tabelle 6

| Eigenschaft | [Einheit] | Vergleich 8[1)] | Beispiel 9 |
|---|---|---|---|
| Fließspirale | cm | 35 | 40 |
| (Temp./Druck) | °C/bar | 270/105 | 270/105 |
| $\sigma_{b\,3,5\,\%}$ | MPa | 120 | 123 |
| $\sigma_{bB}$ | MPa | 131 | 132 |
| $D_{bR}$ | % | 5,4 | 5,3 |
| Biege E-Modul | MPa | 4266 | 4318 |
| $\sigma_R$ | MPa | 83 | 83 |
| $\epsilon_R$ | % | 11,9 | 13,3 |
| Zug E-Modul | MPa | 5063 | 5144 |
| IZOD $a_n$ | KJ/m² | 130 | 88 |
| IZOD $a_k$ | KJ/m² | 9 | 6,4 |
| 1.Aufheizung: (Prüfkörper) | | | |
| Schmelzw. | J/g | 42,5 | 41,4 |
| Maximum | °C | 220,7 | 219,9 |
| 2.Aufheizung: | | | |
| Schmelzw. | J/g | 43,1 | 42,2 |
| Maximum | °C | 219,5 | 217,8 |

1) Vergleich nicht mit extrudiert

Das 2 % PPS modifizierte PA-Compound weist eine erhöhte Fließfähigkeit (bei niedrigerer als der PPS-Schmelztemperatur!) und Steifigkeit auf.

Die Prüfstäbe des PPS-haltigen Compounds wiesen eine deutlich bessere Oberfläche auf als die des Vergleichs.

Beispiel 6 und Vergleich 5

Ein 30 % mineralgefülltes PA 66 (Durethan® KU 2-2403/30, ein Produkt der Bayer AG) wird mit 2 % PPS (s. Bsp. 3) über einen ZSK-53 Doppelwellenextruder compoundiert und wie üblich aufgearbeitet. Die wichtigsten mechanischen Eigenschaften sind mit denen eines Vergleichs in Tabelle 7 zusammengestellt.

Tabelle 7

| Eigenschaft | [Einheit] | Vergleich 9[1] | Beispiel 10 |
|---|---|---|---|
| $\sigma_R$ | MPa | 90 | 95 |
| $\sigma_R$ | % | 4,5 | 4,8 |
| Zug E-Modul | MPa | 5500 | 5808 |
| IZOD $a_n$ | KJ/m² | 80 | 62 |
| IZOD $a_k$ | KJ/m² | 8 | 6,1 |
| HDT A | °C | 101 | 176 |
| B | °C | 240 | 242 |
| 1.Aufheizung: (Prüfkörper) | | | |
| Schmelzw. | J/g | 51,4 | 43,8 |
| Maximum | °C | 260,5 | 263,3 |
| 2.Aufheizung: | | | |
| Schmelzw. | J/g | 50,6 | 47,8 |
| Maximum | °C | 258,6 | 260,7 |

1) Vergleich nicht mitextrudiert

Das PPS-haltige Compound weist bei tendenziell erhöhter Zugsteifigkeit und guter Schlagzähigkeit eine drastisch erhöhte Wärmeformbeständigkeit trotz verringerter Kristallinität auf. Die Oberfläche ist gegenüber nicht modifiziertem Produkt deutlich verbessert.

Beispiel 11 und Vergleich 10

Ein 30 % glasfaserverstärktes PA 6 (Durethan® BKV 30, ein Produkt der Bayer AG) wurde mit 2 % PPS (s. Bsp. 3) extrudiert. Die wichtigsten mechanischen Eigenschaften sind mit denen eines Vergleichs in Tabelle 8 zusammengestellt.

Tabelle 8

| Eigenschaft | [Einheit] | Vergleich 10[1)] | Beispiel 11 |
|---|---|---|---|
| $\sigma_R$ | MPa | 179 | 156 |
| $\epsilon_R$ | % | 3,6 | 3,8 |
| Zug E-Modul | MPa | 9893 | 9858 |
| IZOD $a_n$ | KJ/m² | 70 | 70 |
| IZOD $a_k$ | KJ/m² | 17 | 13 |
| HDT A | °C | 195 | 206 |
| · B | °C | 216 | 219 |
| 1.Aufheizung: (Prüfkörper) | | | |
| Schmelzw. | J/g | 38,9 | 35,5 |
| Maximum | °C | 219,4 | 219,3 |
| 2.Aufheizung: | | | |
| Schmelzw. | J/g | 45,0 | 44,7 |
| Maximum | °C | 217,8 | 217,7 |

[1)] Vergleich wurde nicht extrudiert

Trotz der verringerten Kristallinität und der durch die Extrusion verringerten Glasfaserlänge besitzt das modifizierte PA praktisch dieselbe Zugsteifigkeit wie der Vergleich bei drastisch erhöhter Wärmeformbeständigkeit. Die Oberfläche des modifizierten Compounds ist deutlich besser als die des Vergleichs.

Beispiel 12 und Vergleichsbeispiel 11

30 % GF-verstärktes PA6 ($\eta_{rel}$ = 2,95) wurde mit bzw. ohne 2 % PPS (35 Pa.s; 1000 $s^{-1}$, 310 °C) bei 280 °C compoundiert (ZSK 53-Doppelwellenextruder), der Strang in ein Wasserbad abgesponnen und granuliert. Die PPS-haltige Probe war weiß, die Vergleichsprobe wies einen leichten Gelbstich auf.

Beispiel 13 und Vergleichsbeispiel 12

Polyamid 6 ($\eta_{rel}$ = 3,5) wurde mit 1 % PPS der Schmelzviskosität 39 Pa.s bis 310 °C und 1000 $s^{-1}$ bei 280 °C bzw. ohne PPS bei 260 °C compoundiert (ZSK 53-Doppelwellenextruder, 30 kg $h^{-1}$ Durchsatz) die Stränge in ein Wasserbad abgesponnen und granuliert. Aus dem Granulat wurden rechteckige Platten (60·40·4 mm) gespritzt.

Die Reflexionsmessungen wurden bei monochromatischer Probenbeleuchtung mit der Meßgeometrie 6,5/d am Spektralphotometer DIANO MATCH SCAN, für die Normlichtart C/2, gemäß DIN 5033 durchgeführt. Die Probekörper wurden mit einer weißen Opalglaskachel hinterlegt vermessen.

Die Daten für die Remission als Funktion der Wellenlänge des Lichts sind in Tabelle 9 zusammengestellt.

Beispiel 14 und Vergleichsbeispiel 13

In derselben Weise wie für die Beispiele 13 bzw. Vgl. 12 beschrieben wurden Reflexionsmessungen an mit niedermolekularem PPS (12 Pa.s bei 310 °C, 1000 $s^{-1}$) ausgerüsteten PA 6 durchgeführt (s. Tabelle 9). Beide Proben waren auf einen ZSK-53-Doppelwellenextruder bei 285 °C hergestellt worden.

Tabelle 9

| Bsp. | PPS [Gew.-%] | SV[1] [Pa.s] | R[2] in [%] bei λ in [nm] | | | | | | | |
|---|---|---|---|---|---|---|---|---|---|---|
| | | | 400 | 420 | 440 | 460 | 480 | 500 | 600 | 700 |
| 13 | 1 | 39 | 59,2 | 61,6 | 64,0 | 66,3 | 66,3 | 68,2 | 73,6 | 76,9 |
| Vgl. 12 | - | - | 53,0 | 57,0 | 59,7 | 61,0 | 61,7 | 61,7 | 58,5 | 54,9 |
| 14 | 0,5 | 12 | 60,8 | 63,1 | 65,3 | 67,1 | 68,9 | 70,3 | 74,0 | 73,0 |
| Vgl. | - | - | 48,4 | 52,5 | 55,5 | 57,5 | 58,6 | 59,1 | 57,7 | 54,7 |

1) Schmelzviskosität des PPS bei 310 °C, 1000 $s^{-1}$
2) Remissionsgrad

Die Beispiele zeigen, daß durch den erfindungsgemäßen Zusatz (3) die Primärradikalbildungsrate bei UV-Bestrahlung (Maß für die UV-Stabilität) deutlich verringert und/oder die Farbe verbessert (aufgehellt) wird, wobei als quantitatives Maß für die Farbe der Remissionsgrad gewählt wurde und daß weiterhin Steifigkeit, Festigkeit, Wasseraufnahmegeschwindigkeit, Fließfähigkeit und Wärmeformbeständigkeit bei meist niedrigerer Kristallinität verbessert sein können Insbesondere die erhöhte Steifigkeit und Festigkeit bei meist verringerter Kristallinität, d.h.. antinukleierender Wirkung von B), US 4 292 416 und lassen vermuten, daß bei PA 6, 66 und den entsprechenden Copolyamiden nach der vorliegenden Erfindung ein anderer Wirkmechanis-mus als dort beschrieben vorliegt. Die vorliegende Erfindung ist daher überraschend und nicht aus dem Stand der Technik ableitbar.

## Ansprüche

1. Polyamid-Formmassen auf Basis ausgewählter aliphatischer Polyamide mit verringerter Primärradikalbildungsgeschwindigkeit bei UV-Bestrahlung und/oder verbesserter Farbe und sehr guten mechanischen Eigenschaften, dadurch gekennzeichnet, daß sie zu

A) 95 bis 99,7 Gew.-% aus aliphatischen Polyamiden, ausgewählt aus Polyamid 6, Polyamid 66 und Copolyamiden auf Basis dieser, insbesondere PA 6, 66 und 6/66-Copolyamiden,

B) 0,3 bis 5 Gew.-% aus polymeren UV-Stabilisatoren/Farbverbesserern mit dem überwiegenden Strukturelement (I),

$-[Ar-S]-$ (I)

wobei Ar einen gegebenenfalls substituierten Arylenrest bedeutet,

sowie gegebenenfalls

C) 0,001 bis ungefähr 200 Gew.-%, bevorzugt 0,01 bis 100 Gew.-%, bezogen auf die Summe der Gewichte von A) und B), weiterer Zusatzstoffe

bestehen.

2. Polyamid-Formmassen nach Anspruch 1, dadurch gekennzeichnet, daß als Additive B bevorzugt Homo-und Copolymere mit überwiegendem Strukturelement (IV)

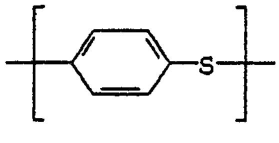

(IV)

und besonders bevorzugt das Homopolymere des Bausteins (IV), Poly-p-phenylensulfid, eingesetzt werden, wobei die Schmelzviskosität (bei 310 °C und 1000 $s^{-1}$) von ca. 10 bis 500 Pa.s, bevorzugt 20 bis 200 Pa.s, besonders bevorzugt 25-180 Pa.s und insbesondere bevorzugt 50-160 Pa.s beträgt.

3. Polyamid-Formmassen nach Ansprüchen 1 + 2, dadurch gekennzeichnet, daß der polymere UV-Stabilisator/Farbverbesserer bevorzugt zu 0,5 bis 4 Gew.-% und besonders bevorzugt zu 0,6 bis 3 Gew.-% eingesetzt wird.

4. Polyamid-Formmassen nach Ansprüchen 1-3, dadurch gekennzeichnet, daß als Additive B) Polyphenylensulfide eingesetzt werden, die ohne oxidativen Molekulargewichtsaufbau, sondern direkt in Lösung

unter Bildung eines Polymeren hohen Molekulargewichts erhalten wurden, besonders bevorzugt hergestellt nach EP 0 171 021.

5. Polyamid-Formmassen nach Ansprüchen 1-4, dadurch gekennzeichnet, daß als Zusatzstoffe gemäß C) beispielsweise Füll- bzw. Verstärkungsstoffe (insbesondere Glasfasern und mineralische Füllstoffe), polymere Legierungspartner (insbesondere Schlagzähmodifikatoren), weitere UV-Stabilisatoren, Antioxidantien, Entformungsmittel, Gleitmittel, Flammschutzmittel u.a. anwesend sein können.

6. Polyamid-Formmassen nach Ansprüchen 1 bis 5, enthaltend Füll- und/oder Verstärkungsstoffe (insbesondere faserförmige), dadurch gekennzeichnet, daß die Oberfläche von Formteilen verbessert ist und/oder ihre Farbe verbessert (heller) ist.

7. Verfahren zur Herstellung der Polyamid-Formmassen nach Ansprüchen 1-6, dadurch gekennzeichnet, daß die Komponenten in der Schmelze, bevorzugt in Extrudern oder Knetern, gegebenenfalls in mehreren Schritten, als reine Stoffe oder Konzentrate, miteinander vermischt werden.

8. Verwendung der Polyamid-Formmassen nach Ansprüchen 1-6 zur Herstellung von Formkörpern, Folien und anderen Gegenständen nach z.B. Verfahren des Spritzgießens und der Extrusion.

9. Formkörper, Folien und andere Gegenstände aus Polyamid-Formmassen nach Anspruch 1-6.

10. Verwendung von Polyphenylensulfiden wie in Ansprüchen 2 + 4 beschrieben als Additive in PA 6, 66 und 6/66-Copolyamiden in Mengen nach Anspruch 3 zur Verringerung der Primärradikalbildungsgeschwindigkeit bei UV-Bestrahlung und/oder Verbesserung (Aufhellung) der Farbe, insbesondere in Kombination mit Füll-/Verstärkungsstoffen.